(19) Europäisches Patentamt

European Patent Office

Office européen des brevets

(11) **EP 2 048 532 A1**

## (12) EUROPEAN PATENT APPLICATION

(43) Date of publication:
**15.04.2009 Bulletin 2009/16**

(51) Int Cl.:
***G02B 15/17*** (2006.01)      ***G02B 15/173*** (2006.01)

(21) Application number: **08017567.2**

(22) Date of filing: **07.10.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **09.10.2007 JP 2007263200**

(71) Applicant: **Fujinon Corporation
Saitama-shi,
Saitama (JP)**

(72) Inventor: **Ikeda, Shinkichi
Saitama-shi
Saitama (JP)**

(74) Representative: **Klunker . Schmitt-Nilson . Hirsch
Destouchesstrasse 68
80796 München (DE)**

## (54) Rear-focusing type zoom lens and imaging apparatus

(57)     A rear-focusing type zoom lens includes in order from an object side: a positive first group that is fixed, a negative second group that is moved toward an image plane along an optical axis during zooming from a wide-angle end to a telephoto end, a negative third group that is fixed in an optical axis direction, and a positive fourth group that moves along the optical axis direction to correct image plane variation, which is caused by the zooming, and to perform focusing. The first group includes a first subgroup having a negative refractive power as a whole and a second subgroup having a positive refractive power as a whole. The first subgroup includes, in order from the object side, a negative meniscus lens having a convex surface directed toward the object side, a first negative lens, a positive lens, and a second negative lens.

EP 2 048 532 A1

**Description**

BACKGROUND OF THE INVENTION

1. Technical Field

The invention relates to a zoom lens for use in a video camera and a television camera compatible with HD, particularly, to a rear-focusing type zoom lens configured to perform focusing by moving a lens group being disposed on an image side of a first group and an imaging apparatus having the rear-focusing type zoom lens.

2. Description of the Related Art

In the field of a zoom lens, a rear-focusing type zoom lens that performs focusing by moving a lens group being disposed on the image side of a first group is known. As compared with a system in which the first lens group is moved to perform focusing, the rear-focusing type zoom lens can reduce an effective diamter of the first lens group. Furthermore, a rear-focusing type zoom lens performs focusing by moving a light-weight lens group, and thus it is possible to perform quick focusing. For example, JP Hei.11-101941 A and JP Hei.11-287952 A describe rear-focusing type zoom lenses that have, in order from the object side, a positive first group, a negative second group, a positive third group, and a negative fourth group. In the lenses, the second group and the fourth group are moved during zooming, and the fourth group is moved to perform focusing.
For zoom lenses, there has been required a wide angle and a high zooming ratio. In the related art, if it is attempted to obtain a ultra wide-angle lens having an angle of view of 90 degrees or more, periphery at the wide-angle end, various aberrations at the telephoto end and the lateral chromatic aberration deteriorate, and thus it is difficult to achieve a high zoom ratio. For example, in any of the zoom lenses described in disclosed in JP Hei.11-101941 A and JP Hei.11-287952 A, a good balance between a high zoom ratio and an ultra wide angle of view cannot be achieved. The following problems are accompanied by achieving the ultra wide angle of view in the rear-focusing type zoom lens. That is, a back focal length is shortened, lateral chromatic aberration and distortion are deteriorated, it is difficult to achieve a high zoom ratio because aberration fluctuation caused by zooming increases, a diameter of the first group increases, and the like. Accordingly, it has been demanded to solve these problems and to develop a zoom lens that achieves a good balance between an ultra wide angle of view and a high zoom ratio.

SUMMARY OF THE INVENTION

The invention has been made in view of the above circumstances and provides a rear-focusing type zoom lens that in which aberrations are well corrected and a good balance between an ultra wide angle of view and a high zoom ratio can be achieved, and an imaging apparatus that is mounted with the rear-focusing type zoom lens and can obtain a high quality image at an ultra wide angle of view.
According to an aspect of the invention, a rear-focusing type zoom lens includes, in order from an object side, a positive first group, a negative second group, a negative third group and a positive fourth group. The positive first group is fixed. The negative second group moves toward an image plane along an optical axis during zooming from a wide-angle end to a telephoto end. The negative third group is fixed in an optical axis direction. The positive fourth group moves along the optical axis direction to correct image plane variation, which is caused by the zooming, and to perform focusing. The first group includes, in order from the object side, a first subgroup having a negative power as a whole and a second subgroup having a positive power as a whole. The first subgroup includes, in order from the object side, a negative meniscus lens having a convex surface directed toward the object side, a first negative lens, a positive lens and a second negative lens.
In the rear-focusing type zoom lens according to the aspect of the invention, the first group has a retro-focus type structure including the negative first subgroup and the positive second subgroup, and a plurality of negative lenses are employed in the first subgroup. With this configuration, the lens configuration is optimized. Therefore, it is possible to achieve an ultra wide angle of view of 90 degrees or more and to sufficiently correct aberrations for achieving a high zooming ratio.
In addition, if any of the following preferable conditions is appropriately adopted and satisfied, it is further facilitated to achieve the ultra wide angle of view and the high zoom ratio.
In the rear-focusing type zoom lens, it is preferable that the following conditional expression is satisfied:

$$0.5 < |f11/f1| < 2 \qquad (1)$$

where
f11 denotes a focal length of the first subgroup, and
f1 denotes a focal length of the first group.

Also, it is preferable that the negative meniscus lens satisfies the following conditional expressions:

$$n11 > 1.8 \qquad (2)$$

$$\nu11 > 30 \qquad (3)$$

where
n11 denotes a refractive index of the negative meniscus lens at the d-line, and
$\nu 11$ is an Abbe number of the negative meniscus lens at the d-line.

Also, it is preferable that the first negative lens satisfies the following conditional expressions:

$$n12 > 1.8 \qquad (4)$$

$$\nu12 > 30 \qquad (5)$$

where
n12 denotes a refractive index of the first negative lens at the d-line, and
$\nu 12$ denotes an Abbe number of the first negative lens at the d-line.

Also, it is preferable that an image-side surface of the positive lens of the first subgroup has a stronger curvature than an object-side surface thereof.

Also, it is preferable that the second negative lens of the first subgroup is a negative meniscus lens having a concave surface directed toward the object side.

Also, it is preferable that the second negative lens of the first subgroup satisfies the following conditional expressions:

$$n14 > 1.8 \qquad (6)$$

$$\nu14 > 30 \qquad (7)$$

where
n14 denotes a refractive index of the second negative lens at the d-line, and
$\nu 14$ denotes an Abbe number of the second negative lens at the d-line.

Also, in the rear-focusing type zoom lens, it is preferable that the second subgroup includes, in order from the object side, a first positive lens, a negative lens, a second positive lens, and a positive lens group including at least a third positive lens.

In this case, it is preferable that the first positive lens of the second subgroup is a biconvex lens.

Also, it is preferable that the negative lens of the second subgroup satisfies the following conditional expression:

$$n16 > 1.8 \qquad (8)$$

where

n16 denotes a refractive index of the negative lens of the second subgroup at the d-line.

Also, it is preferable that the first positive lens of the second subgroup satisfies the following conditional expressions:

$$n17 < 1.5 \qquad (9)$$

$$v17 > 70 \qquad (10)$$

where
n17 denotes a refractive index of the second positive lens at the d-line, and
v 17 denotes an Abbe number of the second positive lens at the d-line.

Furthermore, it is preferable that the negative lens of the second subgroup and the second positive lens of the second subgroup are cemented to each other.

Also, it is preferable that the fourth group has at least one aspherical surface.

Also, the rear-focusing type zoom lens may further include a positive or negative fifth group that is disposed on the image-plane side of the fourth group.

Also, the third group may include, in order from the object side, a third subgroup, a fourth subgroup, and a fifth subgroup, and the fourth subgroup may be movable for image stabilization in a direction perpendicular to the optical axis.

In this case, it is preferable that the fourth subgroup has at least one aspherical surface.

According to another aspect of the invention, an imaging apparatus includes the rear-focusing type zoom lens having any of the above described configurations, and an imaging device that outputs an imaging signal based on an optical image formed by the rear-focusing type zoom lens.

In this imaging apparatus, a high-resolution imaging signal is obtained based on a wide-angle and high-resolution optical image formed by the rear-focusing type zoom lens, and an image having a ultra wide-angle and high quality is obtained based on the imaging signal.

According to the rear-focusing type zoom lens having any of the above configurations, the first group has a retro-focus type structure including the negative first subgroup and the positive second subgroup, and a plurality of negative lenses are employed in the first subgroup. With this configuration, the lens configuration is optimized. Therefore, it is possible to well correct various aberrations and to achieve a good balance between an ultra wide-angle and a high zoom ratio.

In addition, the imaging apparatus having the above configuration outputs an imaging signal based on an optical image formed by the rear-focusing type zoom lens. Therefore, it is possible to obtain an image having an ultra wide-angle and a high quality.

BRIEF DESCRIPTION OF THE DRAWINGS

Fig. 1 is a sectional view of a first configuration example of a rear-focusing type zoom lens according to an embodiment of the invention, corresponding to Example 1.

Fig. 2 is a sectional view of a second configuration example of the rear-focusing type zoom lens according to the embodiment of the invention, corresponding to Example 2.

Fig. 3 is a sectional view of a third configuration example of the rear-focusing type zoom lens according to the embodiment of the invention, corresponding to Example 3.

Fig. 4 is a diagram showing basic lens data of the rear-focusing type zoom lens according to Example 1.

Fig. 5 is a diagram showing other lens data of the rear-focusing type zoom lens according to Example 1, where Fig. 5(A) shows aspherical surface data, Fig. 5(B) shows various data about zooming, and Fig. 5(C) shows focal length data of the respective groups.

Fig. 6 is a diagram showing basic lens data of the rear-focusing type zoom lens according to Example 2.

Fig. 7 is a diagram showing other lens data of the rear-focusing type zoom lens according to Example 2, where Fig. 7(A) shows aspherical surface data, Fig. 7(B) shows various data about zooming, and Fig. 7(C) shows focal length data of the respective groups.

Fig. 8 is a diagram showing basic lens data of the rear-focusing type zoom lens according to Example 3.

Fig. 9 is a diagram showing other lens data of the rear-focusing type zoom lens according to Example 3, where Fig.

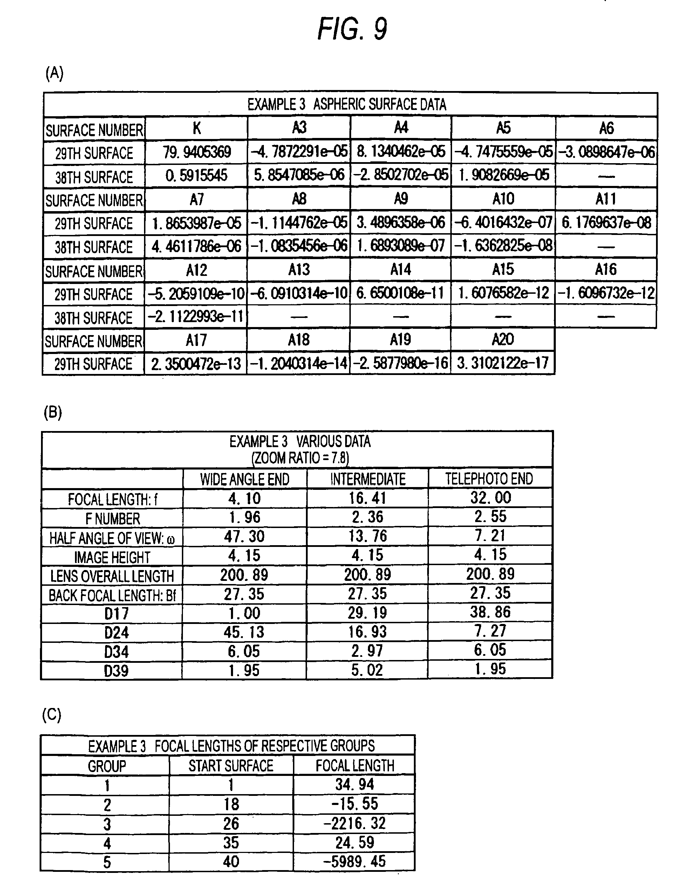

9(A) shows aspherical surface data, Fig. 9(B) shows various data about zooming, and Fig. 9(C) shows focal length data of the respective groups.

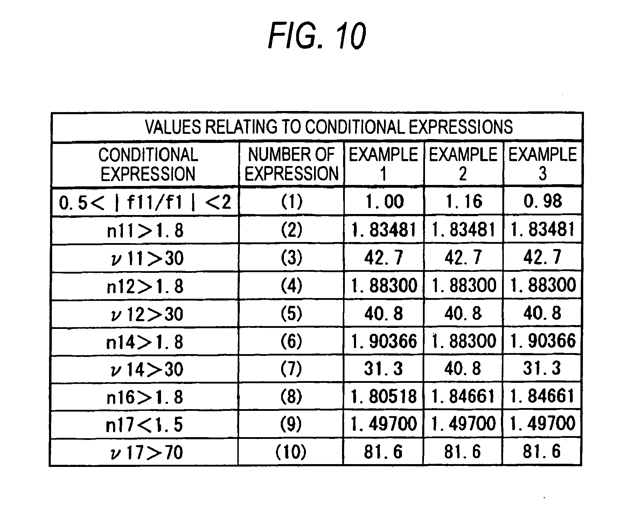

Fig. 10 is a diagram collectively showing values of conditional expressions for the respective Examples.

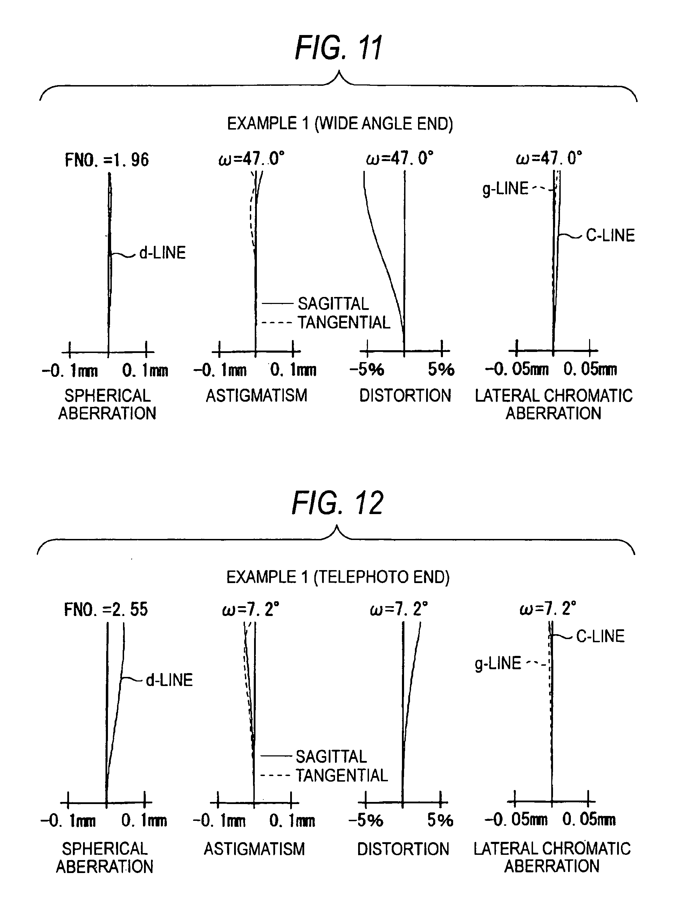

Fig. 11 is an aberration diagram showing various aberrations of the rear-focusing type zoom lens according to Example 1 at a wide-angle end, where Fig. 11 shows spherical aberration, astigmatism, distortion, and lateral chromatic aberration.

Fig. 12 is an aberration diagram showing various aberrations of the rear-focusing type zoom lens according to Example 1 at a telephoto end, where Fig. 12 shows spherical aberration, astigmatism, distortion, and lateral chromatic aberration.

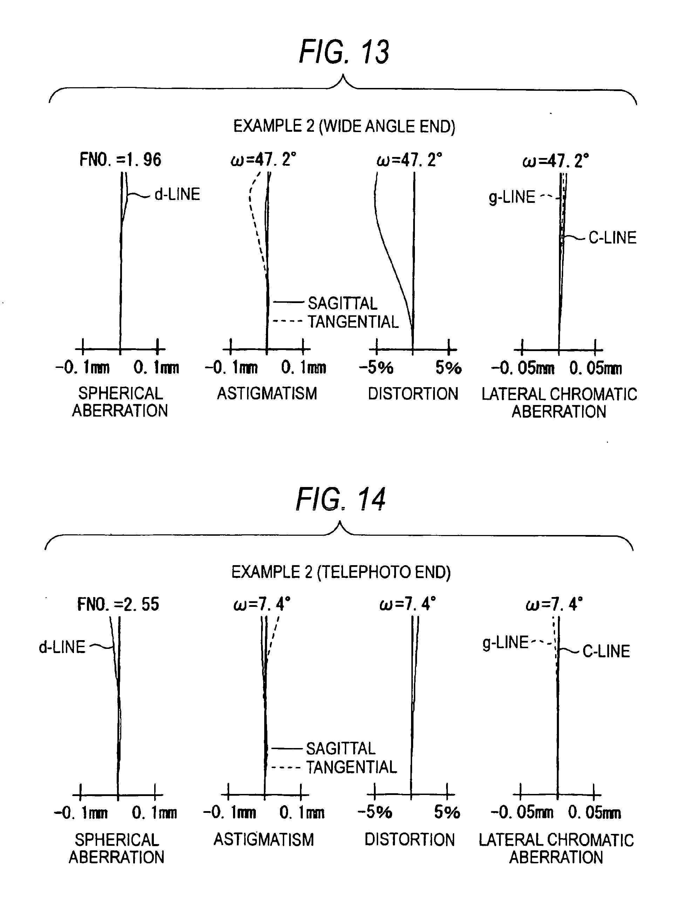

Fig. 13 is an aberration diagram showing various aberrations of the rear-focusing type zoom lens according to Example 2 at a wide-angle end, where Fig. 13 shows spherical aberration, astigmatism, distortion, and lateral chromatic aberration.

Fig. 14 is an aberration diagram showing various aberrations of the rear-focusing type zoom lens according to Example 2 at a telephoto end, where Fig. 14 shows spherical aberration, astigmatism, distortion, and lateral chromatic aberration.

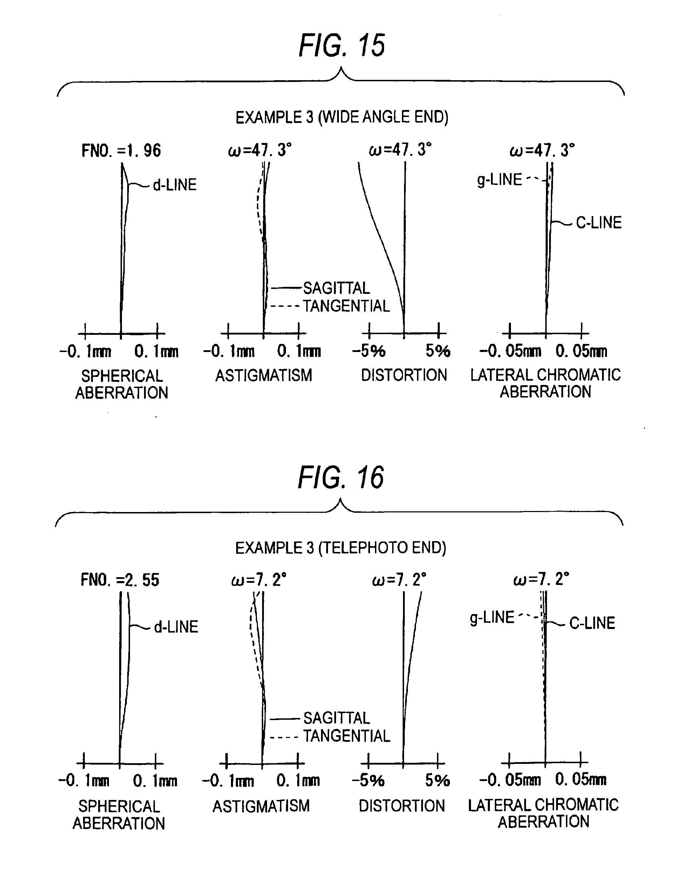

Fig. 15 is an aberration diagram showing various aberrations of the rear-focusing type zoom lens according to Example 3 at a wide-angle end, where Fig. 15 shows spherical aberration, astigmatism, distortion, and lateral chromatic aberration.

Fig. 16 is an aberration diagram showing various aberrations of the rear-focusing type zoom lens according to Example 3 at a telephoto end, where Fig. 16 shows spherical aberration, astigmatism, distortion, and lateral chromatic aberration.

## DETAILED DESCRIPTION OF EMBODIMENTS OF THE INVENTION

Hereinafter, embodiments of the invention will be described in detail with reference to the accompanying drawings.

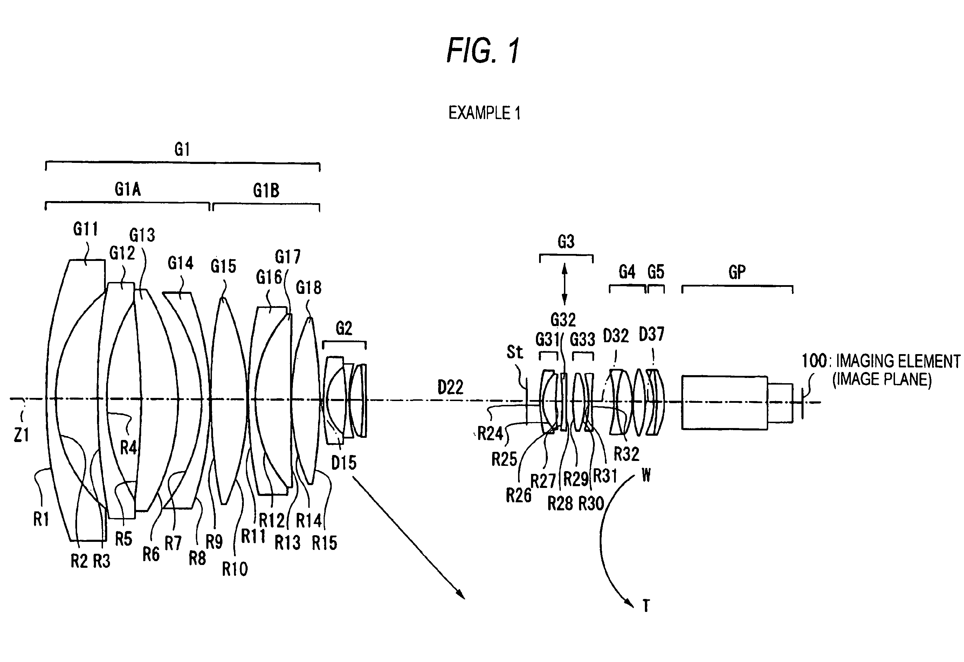

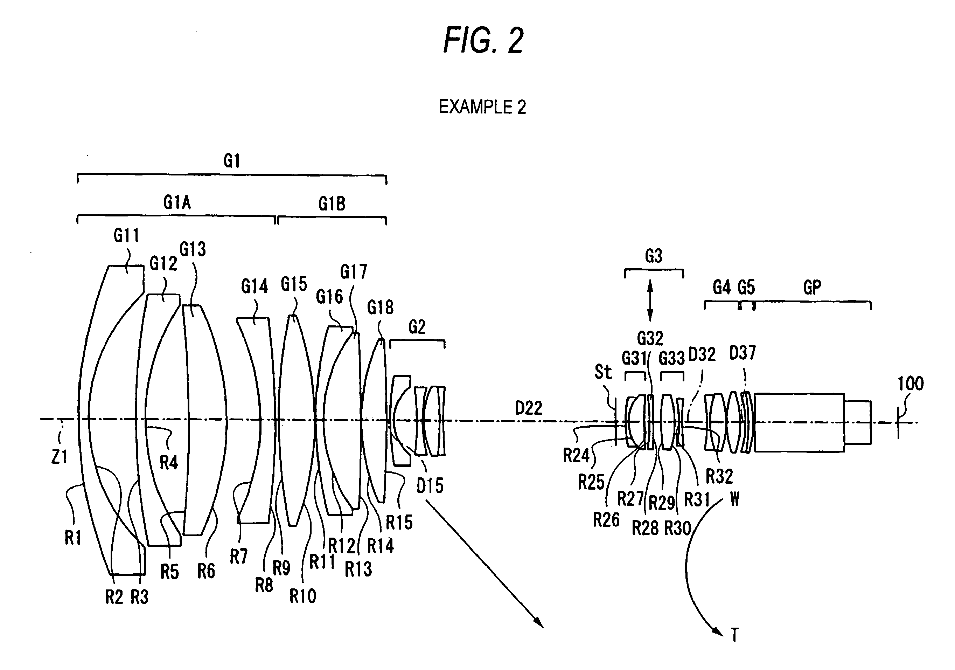

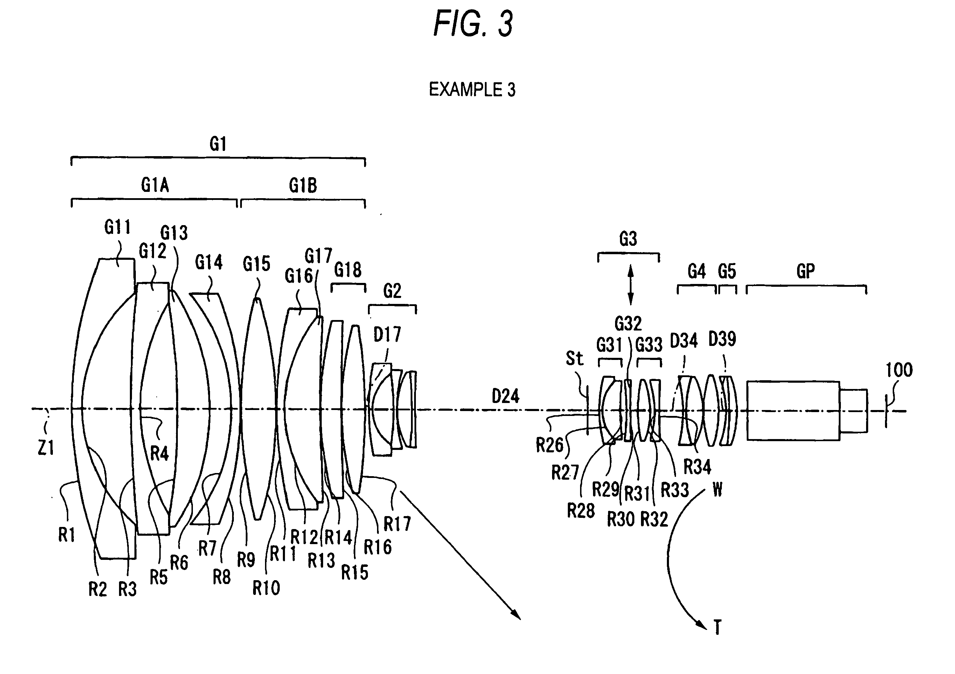

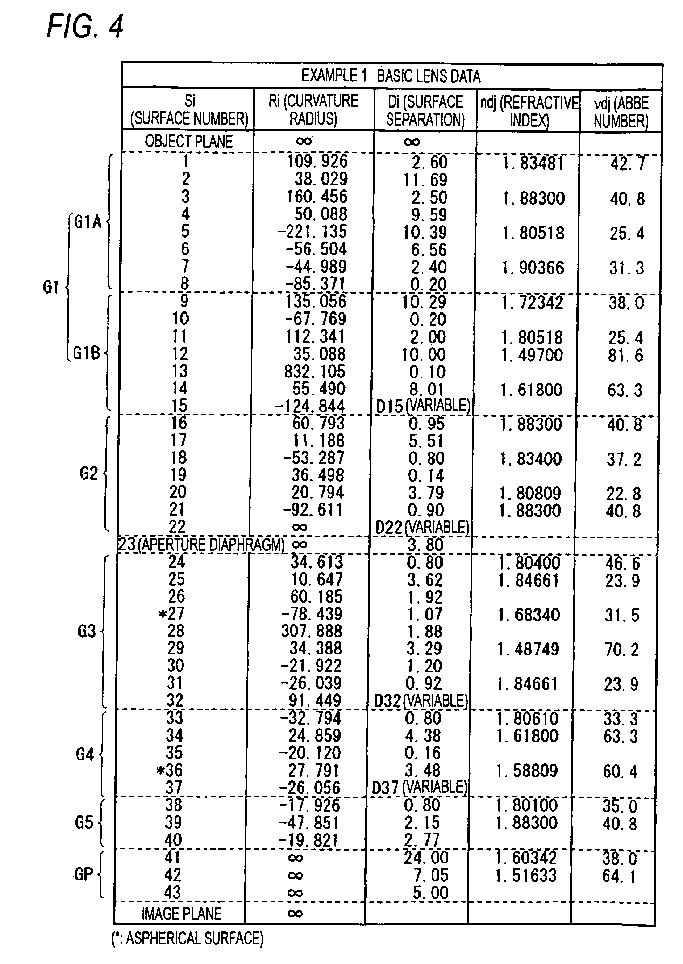

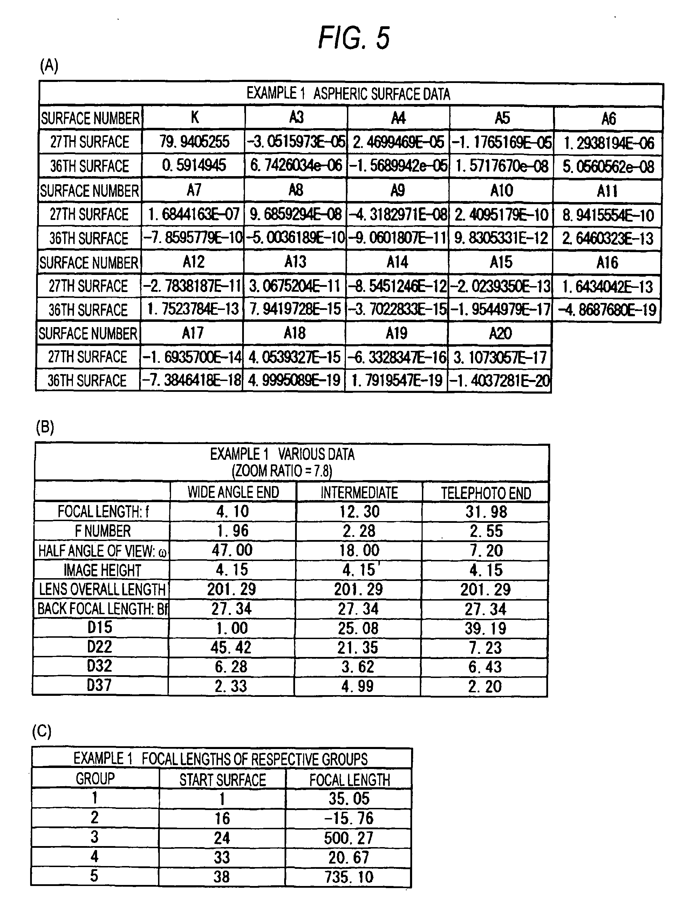

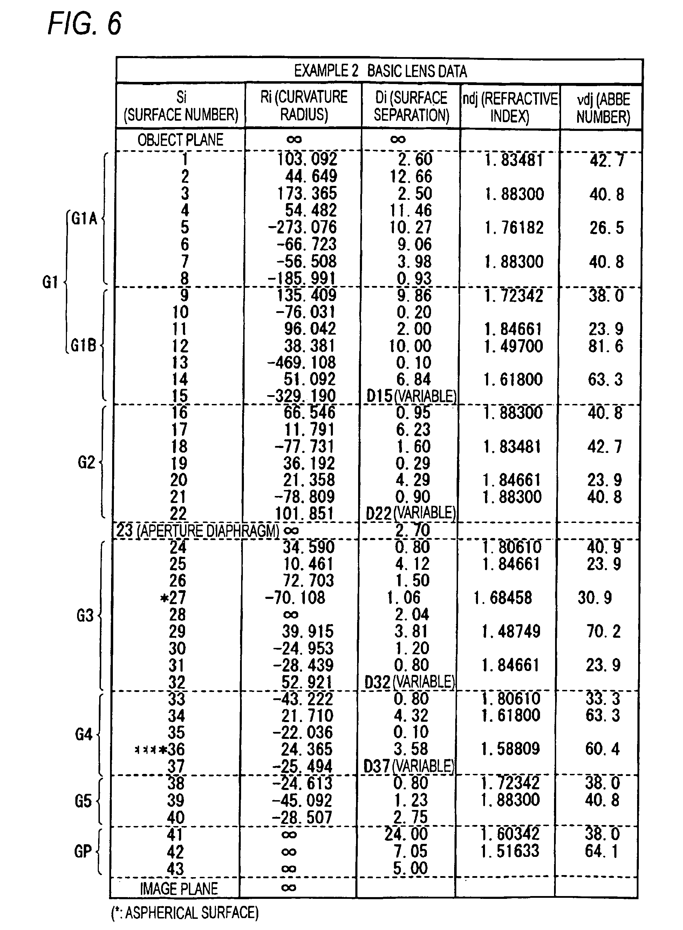

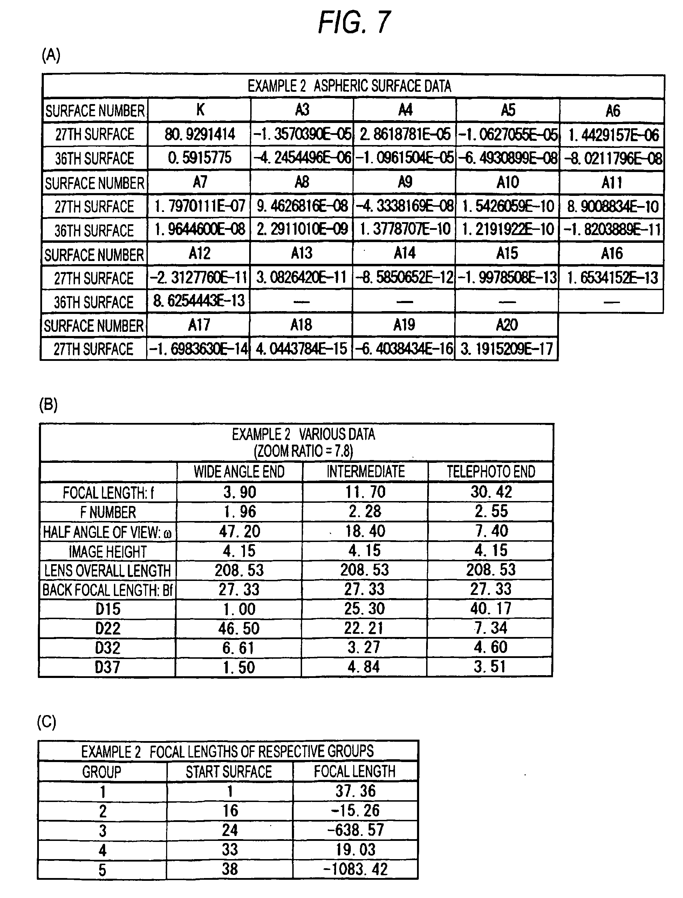

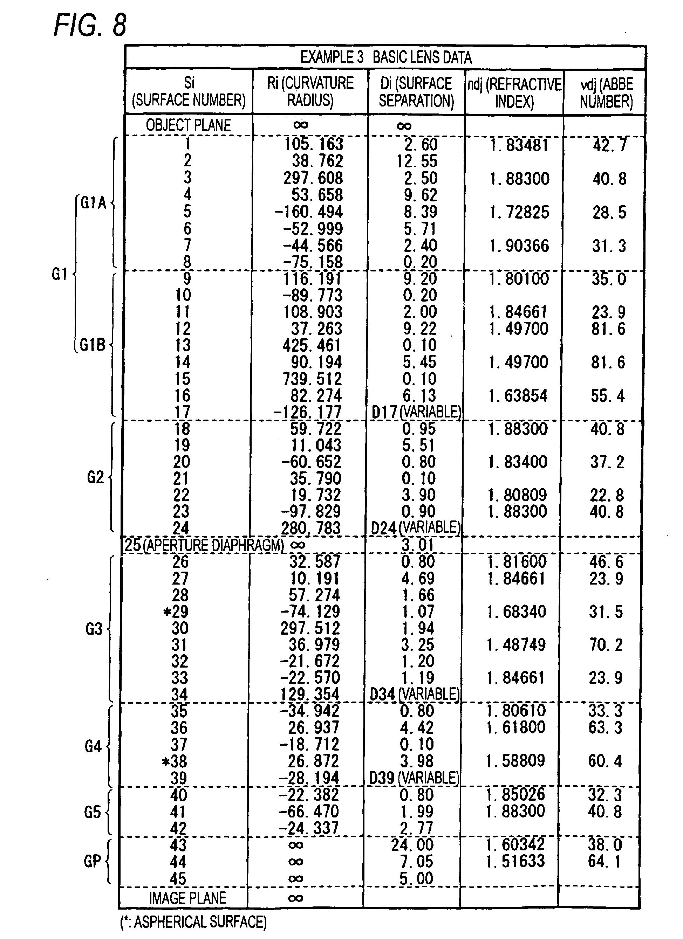

Fig. 1 shows a first configuration example of a rear-focusing type zoom lens system according to an embodiment of the invention. This configuration example corresponds to a lens configuration of a first numerical example (shown in Figs. 4 and 5(A) to 5(C)), which will be described later. Fig. 2 shows a second configuration example and corresponds to a lens configuration of a second numerical example (Figs. 6 and 7(A) to 7(C)), which will be described later. Fig. 3 shows a third configuration example and corresponds to a lens configuration of a third numerical example (Figs. 8 and 9(A) to (C)), which will be described later. Also, each of Figs. 1 to 3 shows the lens arrangement in which the lens is in a wide-angle end state and focuses on an object at infinity. In Figs. 1 to 3, a reference sign Ri represents a curvature radius of i-th surface, where a surface of a lens element on the most object side is regarded as a first surface and the number i is the sequential number that sequentially increases as it gets closer to the image side (the image formation side). The reference sign Di represents a surface separation, on an optical axis Z1, between i-th surface and (i+1)th surface. The reference sign Di is only shown on the surface separations that change in accordance with the zooming operation. The reference sign Ri is only shown on a first group G1 and a third group G3 that are characterized parts in this embodiment.

The rear-focusing type zoom lens according to this embodiment is formed into a zoom lens having a high zoom ratio (about 8 times) and a ultra wide angle of view (an angle of view of about 94 degrees) so as to be appropriate to video cameras and television cameras compatible HD. This rear-focusing type zoom lens includes, in order from the object side along the optical axis Z1, a positive fixed first group G1, a negative second group G2 that moves toward an image plane along the optical axis during zooming from a wide-angle end to a telephoto end, a positive or negative third group G3 that is fixed in an optical axis direction, and a positive fourth group G4 that moves along the optical axis direction to correct the image plane variation, which is caused by the zooming, and to perform focusing. An aperture diaphragm St is an optical aperture diaphragm and is disposed on the object side of the third group G3.

The rear-focusing type zoom lens further includes a positive or negative fifth group G5 that is disposed on the image plane side of the fourth group G4. In the first configuration example shown in Fig. 1, the fifth group G5 has a positive power. In the second and third configuration example shown in Figs. 2 and 3, the fifth group G5 has a negative power. It is advantageous in correction of the chromatic aberration to provide the fifth group G5. Furthermore, the fifth group G5 also provides another advantage that dust is prevented from entering into a lens barrel.

On the image formation plane (an imaging surface) of the rear-focusing type zoom lens, an imaging element 100 such as a CCD (a Charge Coupled Device) or a CMOS (a Complementary Metal Oxide Semiconductor) is disposed. Also, between the last lens group (the fifth group G5) and the imaging surface, a color separating prism block GP is disposed. The imaging element 100 outputs an electric signal (an imaging signal) based on a subject image formed by the rear-focusing type zoom lens. An imaging apparatus includes at least the rear-focusing type zoom lens of this embodiment and the imaging element 100.

In the rear-focusing type zoom lens, the second group G2 and the fourth group G4 move along a locus shown in the figures during zooming. Specifically, the second group G2 moves toward the image plane along the optical axis Z1 during zooming from the wide-angle end (W) to the telephoto end (T), thereby widening the space between the first group G1 and the second group G2. As the zooming proceeds from the wide-angle end to the telephoto end, the fourth group G4 moves on the optical axis Z1 toward the object side, and then moves toward the image side. Thus, the fourth group G4 moves along a locus having an arc shape. The fourth group G4 also moves during focusing in each zoom range. In order to perform focusing at the time of close-range photography, the fourth group G4 moves to narrow the space between the third group G3 and the fourth group G4. The first group G1 is always fixed during zooming and focusing. Also, as described later, the third group G3 is configured so that a part of lenses thereof are movable for vibration control in a direction perpendicular to the optical axis Z1.

The first group G1 includes, in order from the object side, a first subgroup G1A having a negative power as a whole and a second subgroup G1B having a positive power as a whole.

The first subgroup G1A includes, in order from the object side, one negative meniscus lens G11 having a convex surface directed toward the object side, one negative lens G12, one positive lens G13, and one negative lens G14. It is preferable that the first subgroup G1A satisfies the following condition.

$$0.5 < |f11/f1| < 2 \qquad (1)$$

where f11 denotes a focal length of the first subgroup G1A, and f1 denotes a focal length of the first group G 1.

It is preferable that the negative meniscus lens G11 satisfies the following conditions.

$$n11 > 1.8 \qquad (2)$$

$$\nu11 > 30 \qquad (3)$$

where n11 denotes a refractive index of the negative meniscus lens G11 at the d-line, and $\nu11$ denotes an Abbe number of the negative meniscus lens G11 at the d-line.

It is preferable that the negative lens G12 satisfies the following conditions.

$$n12 > 1.8 \qquad (4)$$

$$\nu12 > 30 \qquad (5)$$

where n12 denotes a refractive index of the negative lens G12 at the d-line, and $\nu12$ denotes an Abbe number of the negative lens G12 at the d-line.

It is preferable that an image-side surface of the positive lens G13 of the first subgroup G1A have a stronger curvature than an object-side surface thereof.

Furthermore, it is preferable that the negative lens G14 is a negative meniscus lens having a concave surface directed toward the object side.

Also, it is preferable that the negative lens G14 satisfies the following conditions.

$$n14 > 1.8 \qquad (6)$$

$$\nu14 > 30 \qquad (7)$$

where n14 denotes a refractive index of the negative lens G14 at the d-line, and $\nu14$ denotes an Abbe number of the negative lens G14 at the d-line.

The second subgroup G1B includes, in order from the object side, a positive lens G15, a negative lens G16, a positive lens G17, and a positive lens group G18 including at least one positive lens. In the first and second configuration example shown in Figs. 1 and 2, the positive lens group G18 includes one positive lens. In the third configuration example shown in Fig. 3, the positive lens group G18 includes two positive lenses.

In the second subgroup G1B, it is preferable that the positive lens G15 is a biconvex lens. Furthermore, it is preferable that the negative lens G16 and the positive lens G17 are cemented to each other. Also, it is preferable that the negative lens G16 satisfies the following condition:

$$n16 > 1.8 \qquad (8)$$

where n16 denotes a refractive index of the negative lens G16 at the d-line.

Also, it is preferable that the positive lens G17 satisfies the following conditions:

$$n17 < 1.5 \qquad (9)$$

$$\nu17 > 70 \qquad (10)$$

where n17 denotes a refractive index of the positive lens G17 at the d-line, and $\nu17$ denotes an Abbe number of the positive lens G17 at the d-line.

In the first configuration example shown in Fig. 1, the third group G3 has a positive refractive power. In the second and third configuration example shown in Figs. 2 and 3, the third group G3 has a negative refractive power. The third group G3 includes, in order from the object side, a third subgroup G31, a fourth subgroup G32, and a fifth subgroup G33. The fourth subgroup G32 is configured to be movable for image stabilization in a direction perpendicular to the optical axis Z1. With such a configuration, it is possible to achieve a zoom lens having a vibration control function. It is preferable that the fourth subgroup has at least one aspherical surface. By employing the aspherical surface, it is possible to suppress performance deterioration at the time of vibration control.

It is preferable that the fourth group G4 has at least one aspherical lens. In addition, it is preferable that the fourth group G4 has a cemented lens.

Hereinafter, operations and advantages of the rear-focusing type zoom lens configured as described above will be described.

In the rear-focusing type zoom lens, the first group G1 has a retro-focus type structure including the negative first subgroup G1A and the positive second subgroup G1B. In addition, the lens configurations of the first subgroup G1A and the second subgroup G1B are optimized. Thereby, it is possible to correct aberrations sufficiently for achieving a high zoom ratio while achieving an ultra wide angle of 90 degrees or more and.

In particular, in the configuration of the first subgroup G1A, the plurality of negative lenses are arranged in order from the object side. Thus, it is possible to achieve a wide angle while suppressing fluctuation of the field of curvature. Also, the lens surface the most object side has a convex surface. Thereby, it is possible to well suppress distortion and astigmatism. Furthermore, the positive lens G13 and the negative lens G14 are disposed in the rear of the two negative lenses G11 and G12. Thereby, it is possible to correct lateral chromatic aberration and field of curvature. As a result, it is possible to correct aberrations sufficiently for achieving an ultra wide-angle of 90 degrees or more while achieving a high zoom ratio.

The conditional expression (1) defines a refractive power appropriate to the first subgroup G1A with respect to the refractive power of the first group G1. If |f11/f1| exceeds the upper limit of the conditional expression (1), the refractive power of the first subgroup G1A decreases, and the field of curvature can not be corrected over the entire zooming range. Thus, it is difficult to obtain a required angle of view. Also, if |f11/f1| falls below the lower limits of the conditional expression (1), the refractive power of the first subgroup G1A increase, and thus negative distortion deteriorates.

The conditional expressions (2) to (5) define appropriate refractive indices and Abbe numbers of the negative meniscus lens G11 and the negative lens G12 in the first subgroup G1A. When a glass material having 1.8 or more in refractive index is used for each of the negative meniscus lens G11 and the negative lens G12, it is possible to suppress an increase in diameter while suppressing field of curvature and distortion. Also, by setting an Abbe number to be larger than 30, it is possible to suppress lateral chromatic aberration.

Furthermore, in the first subgroup G1A, a space between the negative lens G12 and the positive lens G 13 serves as an air lens and is effective in correction of field of curvature. Therefore, it is preferable that the image-side surface of the positive lens G13 have a stronger convex power than the object side surface thereof.

In addition, the negative lens G14 includes a negative meniscus lens having a concave surface directed toward the object side opposing to the negative meniscus lens G11, thereby correcting deterioration in various aberrations caused by widening of an angle of view. The conditional expressions (6) to (7) define an appropriate refractive index and an appropriate Abbe number of the negative lens G14. By satisfying the conditional expressions (6) to (7), it is advantageous to correct lateral chromatic aberration, which may be deteriorated by widening of an angle of view.

In addition, in the rear-focusing type zoom lens, the positive lens group G15 of the second subgroup G1B is disposed just after the first subgroup G1A. Thereby, it is possible to suppress an increase in diameter of the first subgroup G1A. In addition, the negative lens G16 and the positive lens G17 are disposed thereafter. Thereby, it is possible to satisfactorily correct chromatic aberration. In addition, the positive lens group G18 is disposed in front of the negative second group G2 that moves during zooming. Thereby, it is possible to suppress an increase in diameter of the whole first group G1.

In particular, in the second subgroup G1B, the positive lens group G15 includes a biconvex lens. Thereby, it is possible to suppress spherical aberration and field of curvature at the telephoto end. Also, the conditional expressions (8) to (10) define refractive indices and Abbe numbers of the negative lens G16 and the positive lens G17 of the second subgroup G1B. When the negative lens G16 and the positive lens G17 constitute a cemented lens and when the conditional expressions (8) to (10) are satisfied, it is possible to satisfactorily correct chromatic aberration. Particularly, it is possible to eliminate secondary spectrum.

Also, in the rear-focusing type zoom lens, an aspherical lens is disposed in the fourth group G4 that moves during zooming and focusing. Thereby, it is possible to prevent fluctuation of aberration that is caused by the zooming. Particularly, it is possible to satisfactorily correct spherical aberration in the whole zoom range.

As described above, according to the rear-focusing type zoom lens of this embodiment, the first group G1 has the retro-focus type structure including the negative first subgroup G1A and the positive second subgroup G1B. Thereby, the configuration is useful to achieve an ultra wide angle of view. In addition, the lens configurations of the first subgroup G1A and second subgroup G1B are optimized. Thereby, it is possible to satisfactorily correct various aberrations while achieving a good balance between the ultra wide-angle and the high zoom ratio. Also, when the rear-focusing type zoom lens according to this embodiment is mounted on the imaging apparatus, it is possible to obtain an image having a ultra wide-angle and a high quality.

[Examples]

Hereinafter, specific numerical examples of the rear-focusing type zoom lens according to the embodiment will be described. In the following explanation, first to third numerical examples will be collectively described.

Figs. 4 and 5(A) to 5(C) show, as Example 1, specific lens data corresponding to the configuration of the rear-focusing type zoom lens shown in Fig. 1. Particularly, Fig. 4 shows basic lens data thereof. In the column of the surface number Si in the lens data of Fig. 4, the number i represents the sequential number of i-th surface that sequentially increases as it gets closer to the image side when a surface of an element, on the most object side, of the rear-focusing type zoom lens according to Example 1 is regarded as a first surface. The column of the curvature radius Ri shows values (mm) of the curvature radius of i-th surface from the object side, assuming that the reference sign R1 in Fig. 1 represents a curvature radius of the first surface. Likewise, the column of the surface separation Di shows spaces (mm), on the optical axis, between the i-th surface Si and the (i+1)th surface Si+1 from the object side. The column of ndj shows values of the refractive index of the j-th optical element from the object side at the d-line (587.6 nm). The column of vdj shows values of the Abbe number of the j-th optical element from the object side at the d-line.

In the rear-focusing type zoom lens according to Example 1, the object-side surface of the lens of the fourth group G4 on the most image side is formed into an aspheric shape. Also, the surface, on the object side, of the fourth subgroup G32 that moves for image stabilization is formed in an aspheric shape. The basic lens data of Fig. 4 shows numerical values of the curvature radius (paraxial curvature radius) in the vicinity of the optical axis as the radiuses of curvature of these aspheric surfaces are represented.

Fig. 5(A) shows aspheric surface data of Example 1. In the numerical values shown as the aspheric surface data, the reference sign 'E' means that a numerical value following it is a 'power exponent' having a base of 10 and that this numerical value having a base of 10 and expressed by an exponential function is multiplied by a numerical value before the 'E'. For example, '1.0E-02' means '$1.0 \times 10^{-2}$'.

As the aspheric surface data, there are shown the respective coefficients Ai and K used in an aspheric surface shape expression expressed by the following expression (A). Here, Z denotes a length (mm) of a perpendicular dropped from a point, which exists on an aspheric surface at a position of a height h from the optical axis, to a tangent plane to the vertex of the aspheric surface (a plane perpendicular to the optical axis). In the rear-focusing type zoom lens of Example 1, as the aspheric surface coefficients Ai, there are used third-order to twentieth-order coefficients A3 to A20 effectively.

$$Z = C \cdot \frac{h^2}{1 + \sqrt{1 - K \cdot C^2 \cdot h^2}} + \sum A_i \cdot h^i \quad (A)$$

where

Z denotes a depth (mm) of an aspheric surface,

h denotes a distance (a height, mm) from the optical axis (a height) to the lens surface,

K denotes an eccentricity,

C denotes a paraxial curvature equal to 1/R (R: a paraxial curvature radius), and

Ai denotes an i-th order (i is an integer not less than 3) aspheric surface coefficient.

Also, in the rear-focusing type zoom lens according to Example 1, the second group G2 and the fourth group G4 move on the optical axis during zooming. Thus, values of the surface separations D15, D22, D32, and D37 in the front and rear of these groups G2 and G4 are variable. Fig. 5(B) shows, as data of these surface separations that are variable during zooming, values thereof at the wide-angle end, a medium focal length and the telephoto end. Fig. 5(B) shows, as the other various data, a paraxial focal length f (mm) of the whole system, a F number (FNO.), a half angle of view ω, an image height, a total length of the lens system, and a back focal length Bf at each of the wide-angle end, the medium focal length, and the telephoto end. Furthermore, a zoom ratio of the rear-focusing type zoom lens according to Example 1 is set to 7.8.

Also, Fig. 5(C) shows paraxial focal lengths (mm) of the first group G1 to the fifth group G5.

Similarly to Example 1 mentioned above, Figs. 6 and 7(A) to 7(C) show, as Example 2, specific lens data corresponding to the configuration of the rear-focusing type zoom lens shown in Fig. 2. In the rear-focusing type zoom lens according to Example 2, similarly to Example 1, the object-side surface of the lens of the fourth group G4 on the most image side is formed in an aspheric shape. Also, the surface, on the object side, of the fourth subgroup G32 that moves for image stabilization is formed in an aspheric shape. Fig. 7(A) shows aspherical surface data thereof. Also, similarly to Example 1, the second group G2 and the fourth group G4 move on the optical axis during zooming, and thus values of surface separations D15, D22, D32, and D37 in the front and rear of these groups G2 and G4 are variable. Fig. 7(B) shows, as data of these surface separations that are variable during zooming, values thereof at the wide-angle end, a medium focal length and the telephoto end. Also, a zoom ratio of the rear-focusing type zoom lens according to Example 2 is set to 7.8.

Similarly, Figs. 8 and 9(A) to 9(C) show, as Example 3, specific lens data corresponding to the configuration of the rear-focusing type zoom lens shown in Fig. 3. In the rear-focusing type zoom lens according to Example 3, similarly to Example 1, the object-side surface of the lens of the fourth group G4 on the most image side is formed in an aspheric shape. Also, the surface, on the object side, of the fourth subgroup G32 that moves for image stabilization is formed in an aspheric shape. Fig. 9(A) shows aspherical surface data thereof. Also, similarly to Example 1, the second group G2 and the fourth group G4 move on the optical axis during zooming, and thus values of surface separations D17, D24, D34, and D39 in the front and rear of these groups G2 and G4 are variable. Fig. 9(B) shows, as data of these surface separations that are variable during zooming, values thereof at the wide-angle end, a medium focal length and the telephoto end. Also, a zoom ratio of the rear-focusing type zoom lens according to Example 3 is set to 7.8.

Fig. 10 collectively shows values of the conditional expressions mentioned above for respective Examples. As shown in Fig. 10, values of Examples fall within the allowable ranges of the conditional expressions.

Fig. 11 shows spherical aberration, astigmatism, distortion (distortion aberration), and lateral chromatic aberration in the rear-focusing type zoom lens according to Example 1, respectively, in a state where the lens at the wide-angle end focuses on an object at infinity. The aberration diagrams show aberrations with using the d-line (a wavelength of 587.6 nm) as a reference wavelength. The spherical aberration diagram shows aberrations at the g-line (a wavelength of 435.8 nm) and the C-line (a wavelength of 656.3 nm). In the astigmatism diagram, the solid line represents aberration in the sagittal direction, and the dashed line represents aberrations in the tangential direction. The FNO. represents a F number, and the ω represents a half angle of view. Similarly, Fig. 12 shows spherical aberration, astigmatism, distortion, and lateral chromatic aberration, respectively, in a state where the lens at the telephoto end focuses on an object at infinity.

Similarly, Fig. 13 shows various aberrations of the rear-focusing type zoom lens according to Example 2 in a state where the lens at the wide-angle end focuses on an object at infinity. Similarly, Fig. 14 shows spherical aberration, astigmatism, distortion, and lateral chromatic aberration, respectively, in a state where the lens at the telephoto end focuses on an object at infinity.

Also, similarly, Fig. 15 shows various aberrations of the rear-focusing type zoom lens according to Example 3 in a state where the lens at the wide-angle end focuses on an object at infinity. Similarly, Fig. 16 shows spherical aberration, astigmatism, distortion, and lateral chromatic aberration, respectively, in a state where the lens at the telephoto end focuses on an object at infinity.

As can be seen from the numerical data and the aberration diagrams, in each Examples, there has been provided the rear-focusing type zoom lens that can well correct the various aberrations and achieve a good balance between the ultra wide angle of view and the high zoom ratio.

Also, the invention is not limited to the embodiments and the examples, and may be modified in various ways. For example, the values of the curvature radius, the surface separation, and the refractive index in the lens elements are not limited to the values shown in the numerical examples, and may have different values.

**Claims**

1. A rear-focusing type zoom lens comprising, in order from an object side:

   a positive first group that is fixed;
   a negative second group that moves toward an image plane along an optical axis during zooming from a wide-angle end to a telephoto end;
   a negative third group that is fixed in an optical axis direction; and
   a positive fourth group that moves along the optical axis direction to correct image plane variation, which is caused by the zooming, and to perform focusing, wherein
   the first group includes, in order from the object side, a first subgroup having a negative power as a whole and a second subgroup having a positive power as a whole, and
   the first subgroup includes, in order from the object side,
   a negative meniscus lens having a convex surface directed toward the object side,
   a first negative lens,
   a positive lens, and
   a second negative lens.

2. The rear-focusing type zoom lens according to claim 1, wherein the following conditional expression is satisfied:

$$0.5 < |f11/f1| < 2 \qquad (1)$$

   where
   f11 denotes a focal length of the first subgroup, and
   f1 denotes a focal length of the first group.

3. The rear-focusing type zoom lens according to any one of claims 1 to 2, wherein the following conditional expressions are further satisfied:

$$n11 > 1.8 \qquad (2)$$

$$v11 > 30 \qquad (3)$$

   where
   n11 denotes a refractive index of the negative meniscus lens at the d-line, and
   $v$ 11 is an Abbe number of the negative meniscus lens at the d-line.

4. The rear-focusing type zoom lens according to any one of claims 1 to 3, wherein the following conditional expressions are further satisfied:

$$n12 > 1.8 \qquad (4)$$

$$\nu12 > 30 \qquad (5)$$

where
n12 denotes a refractive index of the first negative lens at the d-line, and
ν 12 denotes an Abbe number of the first negative lens at the d-line.

5. The rear-focusing type zoom lens according to any one of claims 1 to 4, wherein an image-side surface of the positive lens of the first subgroup has a stronger curvature than an object-side surface thereof.

6. The rear-focusing type zoom lens according to any one of claims 1 to 5, wherein the second negative lens of the first subgroup is a negative meniscus lens having a concave surface directed toward the object side.

7. The rear-focusing type zoom lens according to any one of claims 1 to 6, wherein the following conditional expression is further satisfied:

$$n14 > 1.8 \qquad (6)$$

$$\nu14 > 30 \qquad (7)$$

where
n14 denotes a refractive index of the second negative lens at the d-line, and
ν 14 denotes an Abbe number of the second negative lens at the d-line.

8. The rear-focusing type zoom lens according to any one of claims 1 to 7, wherein the second subgroup includes, in order from the object side,
a first positive lens,
a negative lens,
a second positive lens, and
a positive lens group including at least a third positive lens.

9. The rear-focusing type zoom lens according to claim 8, wherein the first positive lens of the second subgroup is a biconvex lens.

10. The rear-focusing type zoom lens according to any one of claims 8 to 9, wherein the following conditional expression is further satisfied:

$$n16 > 1.8 \qquad (8)$$

where n16 denotes a refractive index of the negative lens of the second subgroup at the d-line.

11. The rear-focusing type zoom lens according to any one of claims 8 to 10, wherein the following conditional expressions are further satisfied:

$$n17 < 1.5 \qquad (9)$$

$$\nu 17 > 70 \qquad (10)$$

where
n17 denotes a refractive index of the second positive lens at the d-line, and
$\nu 17$ denotes an Abbe number of the second positive lens at the d-line.

12. The rear-focusing type zoom lens according to any one of claims 8 to 11, wherein the negative lens of the second subgroup and the second positive lens of the second subgroup are cemented to each other.

13. The rear-focusing type zoom lens according to any one of claims 1 to 12, further comprising:

    a positive or negative fifth group that is disposed on the image-plane side of the fourth group.

14. The rear-focusing type zoom lens according to any one of claims 1 to 13, wherein
    the third group includes, in order from the object side, a third subgroup, a fourth subgroup, and a fifth subgroup, and
    the fourth subgroup is movable for image stabilization in a direction perpendicular to the optical axis.

15. An imaging apparatus comprising:

    the rear-focusing type zoom lens according to any one of claims 1 to 14; and
    an imaging device that outputs an imaging signal based on an optical image formed by the rear-focusing type zoom lens.

FIG. 1

EXAMPLE 1

# FIG. 2

EXAMPLE 2

EP 2 048 532 A1

FIG. 3

EXAMPLE 3

15

## FIG. 4

| EXAMPLE 1 BASIC LENS DATA | | | | |
|---|---|---|---|---|
| Si (SURFACE NUMBER) | Ri (CURVATURE RADIUS) | Di (SURFACE SEPARATION) | ndj (REFRACTIVE INDEX) | vdj (ABBE NUMBER) |
| OBJECT PLANE | ∞ | ∞ | | |
| 1 | 109.926 | 2.60 | 1.83481 | 42.7 |
| 2 | 38.029 | 11.69 | | |
| 3 | 160.456 | 2.50 | 1.88300 | 40.8 |
| 4 | 50.088 | 9.59 | | |
| 5 | -221.135 | 10.39 | 1.80518 | 25.4 |
| 6 | -56.504 | 6.56 | | |
| 7 | -44.989 | 2.40 | 1.90366 | 31.3 |
| 8 | -85.371 | 0.20 | | |
| 9 | 135.056 | 10.29 | 1.72342 | 38.0 |
| 10 | -67.769 | 0.20 | | |
| 11 | 112.341 | 2.00 | 1.80518 | 25.4 |
| 12 | 35.088 | 10.00 | 1.49700 | 81.6 |
| 13 | 832.105 | 0.10 | | |
| 14 | 55.490 | 8.01 | 1.61800 | 63.3 |
| 15 | -124.844 | D15 (VARIABLE) | | |
| 16 | 60.793 | 0.95 | 1.88300 | 40.8 |
| 17 | 11.188 | 5.51 | | |
| 18 | -53.287 | 0.80 | 1.83400 | 37.2 |
| 19 | 36.498 | 0.14 | | |
| 20 | 20.794 | 3.79 | 1.80809 | 22.8 |
| 21 | -92.611 | 0.90 | 1.88300 | 40.8 |
| 22 | ∞ | D22 (VARIABLE) | | |
| 23 (APERTURE DIAPHRAGM) | ∞ | 3.80 | | |
| 24 | 34.613 | 0.80 | 1.80400 | 46.6 |
| 25 | 10.647 | 3.62 | 1.84661 | 23.9 |
| 26 | 60.185 | 1.92 | | |
| *27 | -78.439 | 1.07 | 1.68340 | 31.5 |
| 28 | 307.888 | 1.88 | | |
| 29 | 34.388 | 3.29 | 1.48749 | 70.2 |
| 30 | -21.922 | 1.20 | | |
| 31 | -26.039 | 0.92 | 1.84661 | 23.9 |
| 32 | 91.449 | D32 (VARIABLE) | | |
| 33 | -32.794 | 0.80 | 1.80610 | 33.3 |
| 34 | 24.859 | 4.38 | 1.61800 | 63.3 |
| 35 | -20.120 | 0.16 | | |
| *36 | 27.791 | 3.48 | 1.58809 | 60.4 |
| 37 | -26.056 | D37 (VARIABLE) | | |
| 38 | -17.926 | 0.80 | 1.80100 | 35.0 |
| 39 | -47.851 | 2.15 | 1.88300 | 40.8 |
| 40 | -19.821 | 2.77 | | |
| 41 | ∞ | 24.00 | 1.60342 | 38.0 |
| 42 | ∞ | 7.05 | 1.51633 | 64.1 |
| 43 | ∞ | 5.00 | | |
| IMAGE PLANE | ∞ | | | |

(*: ASPHERICAL SURFACE)

# FIG. 5

(A)

| EXAMPLE 1 ASPHERIC SURFACE DATA | | | | | |
|---|---|---|---|---|---|
| SURFACE NUMBER | K | A3 | A4 | A5 | A6 |
| 27TH SURFACE | 79.9405255 | -3.0515973E-05 | 2.4699469E-05 | -1.1765169E-05 | 1.2938194E-06 |
| 36TH SURFACE | 0.5914945 | 6.7426034e-06 | -1.5689942e-05 | 1.5717670e-08 | 5.0560562e-08 |
| SURFACE NUMBER | A7 | A8 | A9 | A10 | A11 |
| 27TH SURFACE | 1.6844163E-07 | 9.6859294E-08 | -4.3182971E-08 | 2.4095179E-10 | 8.9415554E-10 |
| 36TH SURFACE | -7.8595779E-10 | -5.0036189E-10 | -9.0601807E-11 | 9.8305331E-12 | 2.6460323E-13 |
| SURFACE NUMBER | A12 | A13 | A14 | A15 | A16 |
| 27TH SURFACE | -2.7838187E-11 | 3.0675204E-11 | -8.5451246E-12 | -2.0239350E-13 | 1.6434042E-13 |
| 36TH SURFACE | 1.7523784E-13 | 7.9419728E-15 | -3.7022833E-15 | -1.9544979E-17 | -4.8687680E-19 |
| SURFACE NUMBER | A17 | A18 | A19 | A20 | |
| 27TH SURFACE | -1.6935700E-14 | 4.0539327E-15 | -6.3328347E-16 | 3.1073057E-17 | |
| 36TH SURFACE | -7.3846418E-18 | 4.9995089E-19 | 1.7919547E-19 | -1.4037281E-20 | |

(B)

| EXAMPLE 1 VARIOUS DATA (ZOOM RATIO = 7.8) | | | |
|---|---|---|---|
| | WIDE ANGLE END | INTERMEDIATE | TELEPHOTO END |
| FOCAL LENGTH: f | 4.10 | 12.30 | 31.98 |
| F NUMBER | 1.96 | 2.28 | 2.55 |
| HALF ANGLE OF VIEW: ω | 47.00 | 18.00 | 7.20 |
| IMAGE HEIGHT | 4.15 | 4.15 | 4.15 |
| LENS OVERALL LENGTH | 201.29 | 201.29 | 201.29 |
| BACK FOCAL LENGTH: Bf | 27.34 | 27.34 | 27.34 |
| D15 | 1.00 | 25.08 | 39.19 |
| D22 | 45.42 | 21.35 | 7.23 |
| D32 | 6.28 | 3.62 | 6.43 |
| D37 | 2.33 | 4.99 | 2.20 |

(C)

| EXAMPLE 1 FOCAL LENGTHS OF RESPECTIVE GROUPS | | |
|---|---|---|
| GROUP | START SURFACE | FOCAL LENGTH |
| 1 | 1 | 35.05 |
| 2 | 16 | -15.76 |
| 3 | 24 | 500.27 |
| 4 | 33 | 20.67 |
| 5 | 38 | 735.10 |

## FIG. 6

| | EXAMPLE 2  BASIC LENS DATA | | | |
|---|---|---|---|---|
| Si (SURFACE NUMBER) | Ri (CURVATURE RADIUS) | Di (SURFACE SEPARATION) | ndj (REFRACTIVE INDEX) | vdj (ABBE NUMBER) |
| OBJECT PLANE | ∞ | ∞ | | |
| 1 | 103. 092 | 2. 60 | 1. 83481 | 42. 7 |
| 2 | 44. 649 | 12. 66 | | |
| 3 | 173. 365 | 2. 50 | 1. 88300 | 40. 8 |
| 4 | 54. 482 | 11. 46 | | |
| 5 | -273. 076 | 10. 27 | 1. 76182 | 26. 5 |
| 6 | -66. 723 | 9. 06 | | |
| 7 | -56. 508 | 3. 98 | 1. 88300 | 40. 8 |
| 8 | -185. 991 | 0. 93 | | |
| 9 | 135. 409 | 9. 86 | 1. 72342 | 38. 0 |
| 10 | -76. 031 | 0. 20 | | |
| 11 | 96. 042 | 2. 00 | 1. 84661 | 23. 9 |
| 12 | 38. 381 | 10. 00 | 1. 49700 | 81. 6 |
| 13 | -469. 108 | 0. 10 | | |
| 14 | 51. 092 | 6. 84 | 1. 61800 | 63. 3 |
| 15 | -329. 190 | D15(VARIABLE) | | |
| 16 | 66. 546 | 0. 95 | 1. 88300 | 40. 8 |
| 17 | 11. 791 | 6. 23 | | |
| 18 | -77. 731 | 1. 60 | 1. 83481 | 42. 7 |
| 19 | 36. 192 | 0. 29 | | |
| 20 | 21. 358 | 4. 29 | 1. 84661 | 23. 9 |
| 21 | -78. 809 | 0. 90 | 1. 88300 | 40. 8 |
| 22 | 101. 851 | D22(VARIABLE) | | |
| 23 (APERTURE DIAPHRAGM) | ∞ | 2. 70 | | |
| 24 | 34. 590 | 0. 80 | 1. 80610 | 40. 9 |
| 25 | 10. 461 | 4. 12 | 1. 84661 | 23. 9 |
| 26 | 72. 703 | 1. 50 | | |
| *27 | -70. 108 | 1. 06 | 1. 68458 | 30. 9 |
| 28 | ∞ | 2. 04 | | |
| 29 | 39. 915 | 3. 81 | 1. 48749 | 70. 2 |
| 30 | -24. 953 | 1. 20 | | |
| 31 | -28. 439 | 0. 80 | 1. 84661 | 23. 9 |
| 32 | 52. 921 | D32(VARIABLE) | | |
| 33 | -43. 222 | 0. 80 | 1. 80610 | 33. 3 |
| 34 | 21. 710 | 4. 32 | 1. 61800 | 63. 3 |
| 35 | -22. 036 | 0. 10 | | |
| ****36 | 24. 365 | 3. 58 | 1. 58809 | 60. 4 |
| 37 | -25. 494 | D37(VARIABLE) | | |
| 38 | -24. 613 | 0. 80 | 1. 72342 | 38. 0 |
| 39 | -45. 092 | 1. 23 | 1. 88300 | 40. 8 |
| 40 | -28. 507 | 2. 75 | | |
| 41 | ∞ | 24. 00 | 1. 60342 | 38. 0 |
| 42 | ∞ | 7. 05 | 1. 51633 | 64. 1 |
| 43 | ∞ | 5. 00 | | |
| IMAGE PLANE | ∞ | | | |

(*: ASPHERICAL SURFACE)

# FIG. 7

(A)

| EXAMPLE 2 ASPHERIC SURFACE DATA | | | | | |
|---|---|---|---|---|---|
| SURFACE NUMBER | K | A3 | A4 | A5 | A6 |
| 27TH SURFACE | 80.9291414 | -1.3570390E-05 | 2.8618781E-05 | -1.0627055E-05 | 1.4429157E-06 |
| 36TH SURFACE | 0.5915775 | -4.2454496E-06 | -1.0961504E-05 | -6.4930899E-08 | -8.0211796E-08 |
| SURFACE NUMBER | A7 | A8 | A9 | A10 | A11 |
| 27TH SURFACE | 1.7970111E-07 | 9.4626816E-08 | -4.3338169E-08 | 1.5426059E-10 | 8.9008834E-10 |
| 36TH SURFACE | 1.9644600E-08 | 2.2911010E-09 | 1.3778707E-10 | 1.2191922E-10 | -1.8203889E-11 |
| SURFACE NUMBER | A12 | A13 | A14 | A15 | A16 |
| 27TH SURFACE | -2.3127760E-11 | 3.0826420E-11 | -8.5850652E-12 | -1.9978508E-13 | 1.6534152E-13 |
| 36TH SURFACE | 8.6254443E-13 | — | — | — | — |
| SURFACE NUMBER | A17 | A18 | A19 | A20 | |
| 27TH SURFACE | -1.6983630E-14 | 4.0443784E-15 | -6.4038434E-16 | 3.1915209E-17 | |

(B)

| EXAMPLE 2 VARIOUS DATA (ZOOM RATIO = 7.8) | | | |
|---|---|---|---|
| | WIDE ANGLE END | INTERMEDIATE | TELEPHOTO END |
| FOCAL LENGTH: f | 3.90 | 11.70 | 30.42 |
| F NUMBER | 1.96 | 2.28 | 2.55 |
| HALF ANGLE OF VIEW: ω | 47.20 | 18.40 | 7.40 |
| IMAGE HEIGHT | 4.15 | 4.15 | 4.15 |
| LENS OVERALL LENGTH | 208.53 | 208.53 | 208.53 |
| BACK FOCAL LENGTH: Bf | 27.33 | 27.33 | 27.33 |
| D15 | 1.00 | 25.30 | 40.17 |
| D22 | 46.50 | 22.21 | 7.34 |
| D32 | 6.61 | 3.27 | 4.60 |
| D37 | 1.50 | 4.84 | 3.51 |

(C)

| EXAMPLE 2 FOCAL LENGTHS OF RESPECTIVE GROUPS | | |
|---|---|---|
| GROUP | START SURFACE | FOCAL LENGTH |
| 1 | 1 | 37.36 |
| 2 | 16 | -15.26 |
| 3 | 24 | -638.57 |
| 4 | 33 | 19.03 |
| 5 | 38 | -1083.42 |

## FIG. 8

| | EXAMPLE 3 BASIC LENS DATA | | | |
|---|---|---|---|---|
| Si (SURFACE NUMBER) | Ri (CURVATURE RADIUS) | Di (SURFACE SEPARATION) | ndj (REFRACTIVE INDEX) | vdj (ABBE NUMBER) |
| OBJECT PLANE | ∞ | ∞ | | |
| 1 | 105.163 | 2.60 | 1.83481 | 42.7 |
| 2 | 38.762 | 12.55 | | |
| 3 | 297.608 | 2.50 | 1.88300 | 40.8 |
| 4 | 53.658 | 9.62 | | |
| 5 | -160.494 | 8.39 | 1.72825 | 28.5 |
| 6 | -52.999 | 5.71 | | |
| 7 | -44.566 | 2.40 | 1.90366 | 31.3 |
| 8 | -75.158 | 0.20 | | |
| 9 | 116.191 | 9.20 | 1.80100 | 35.0 |
| 10 | -89.773 | 0.20 | | |
| 11 | 108.903 | 2.00 | 1.84661 | 23.9 |
| 12 | 37.263 | 9.22 | 1.49700 | 81.6 |
| 13 | 425.461 | 0.10 | | |
| 14 | 90.194 | 5.45 | 1.49700 | 81.6 |
| 15 | 739.512 | 0.10 | | |
| 16 | 82.274 | 6.13 | 1.63854 | 55.4 |
| 17 | -126.177 | D17 (VARIABLE) | | |
| 18 | 59.722 | 0.95 | 1.88300 | 40.8 |
| 19 | 11.043 | 5.51 | | |
| 20 | -60.652 | 0.80 | 1.83400 | 37.2 |
| 21 | 35.790 | 0.10 | | |
| 22 | 19.732 | 3.90 | 1.80809 | 22.8 |
| 23 | -97.829 | 0.90 | 1.88300 | 40.8 |
| 24 | 280.783 | D24 (VARIABLE) | | |
| 25 (APERTURE DIAPHRAGM) | ∞ | 3.01 | | |
| 26 | 32.587 | 0.80 | 1.81600 | 46.6 |
| 27 | 10.191 | 4.69 | 1.84661 | 23.9 |
| 28 | 57.274 | 1.66 | | |
| *29 | -74.129 | 1.07 | 1.68340 | 31.5 |
| 30 | 297.512 | 1.94 | | |
| 31 | 36.979 | 3.25 | 1.48749 | 70.2 |
| 32 | -21.672 | 1.20 | | |
| 33 | -22.570 | 1.19 | 1.84661 | 23.9 |
| 34 | 129.354 | D34 (VARIABLE) | | |
| 35 | -34.942 | 0.80 | 1.80610 | 33.3 |
| 36 | 26.937 | 4.42 | 1.61800 | 63.3 |
| 37 | -18.712 | 0.10 | | |
| *38 | 26.872 | 3.98 | 1.58809 | 60.4 |
| 39 | -28.194 | D39 (VARIABLE) | | |
| 40 | -22.382 | 0.80 | 1.85026 | 32.3 |
| 41 | -66.470 | 1.99 | 1.88300 | 40.8 |
| 42 | -24.337 | 2.77 | | |
| 43 | ∞ | 24.00 | 1.60342 | 38.0 |
| 44 | ∞ | 7.05 | 1.51633 | 64.1 |
| 45 | ∞ | 5.00 | | |
| IMAGE PLANE | ∞ | | | |

(*: ASPHERICAL SURFACE)

Groupings:
- G1: G1A (surfaces 1–8), G1B (surfaces 9–17)
- G2: surfaces 18–24
- G3: surfaces 26–34
- G4: surfaces 35–39
- G5: surfaces 40–42
- GP: surfaces 43–45

# FIG. 9

(A)

| EXAMPLE 3  ASPHERIC SURFACE DATA | | | | | |
|---|---|---|---|---|---|
| SURFACE NUMBER | K | A3 | A4 | A5 | A6 |
| 29TH SURFACE | 79.9405369 | −4.7872291e−05 | 8.1340462e−05 | −4.7475559e−05 | −3.0898647e−06 |
| 38TH SURFACE | 0.5915545 | 5.8547085e−06 | −2.8502702e−05 | 1.9082669e−05 | — |
| SURFACE NUMBER | A7 | A8 | A9 | A10 | A11 |
| 29TH SURFACE | 1.8653987e−05 | −1.1144762e−05 | 3.4896358e−06 | −6.4016432e−07 | 6.1769637e−08 |
| 38TH SURFACE | 4.4611786e−06 | −1.0835456e−06 | 1.6893089e−07 | −1.6362825e−08 | — |
| SURFACE NUMBER | A12 | A13 | A14 | A15 | A16 |
| 29TH SURFACE | −5.2059109e−10 | −6.0910314e−10 | 6.6500108e−11 | 1.6076582e−12 | −1.6096732e−12 |
| 38TH SURFACE | −2.1122993e−11 | — | — | — | — |
| SURFACE NUMBER | A17 | A18 | A19 | A20 | |
| 29TH SURFACE | 2.3500472e−13 | −1.2040314e−14 | −2.5877980e−16 | 3.3102122e−17 | |

(B)

| EXAMPLE 3  VARIOUS DATA (ZOOM RATIO = 7.8) | | | |
|---|---|---|---|
| | WIDE ANGLE END | INTERMEDIATE | TELEPHOTO END |
| FOCAL LENGTH: f | 4.10 | 16.41 | 32.00 |
| F NUMBER | 1.96 | 2.36 | 2.55 |
| HALF ANGLE OF VIEW: ω | 47.30 | 13.76 | 7.21 |
| IMAGE HEIGHT | 4.15 | 4.15 | 4.15 |
| LENS OVERALL LENGTH | 200.89 | 200.89 | 200.89 |
| BACK FOCAL LENGTH: Bf | 27.35 | 27.35 | 27.35 |
| D17 | 1.00 | 29.19 | 38.86 |
| D24 | 45.13 | 16.93 | 7.27 |
| D34 | 6.05 | 2.97 | 6.05 |
| D39 | 1.95 | 5.02 | 1.95 |

(C)

| EXAMPLE 3  FOCAL LENGTHS OF RESPECTIVE GROUPS | | |
|---|---|---|
| GROUP | START SURFACE | FOCAL LENGTH |
| 1 | 1 | 34.94 |
| 2 | 18 | −15.55 |
| 3 | 26 | −2216.32 |
| 4 | 35 | 24.59 |
| 5 | 40 | −5989.45 |

## FIG. 10

| VALUES RELATING TO CONDITIONAL EXPRESSIONS | | | | |
|---|---|---|---|---|
| CONDITIONAL EXPRESSION | NUMBER OF EXPRESSION | EXAMPLE 1 | EXAMPLE 2 | EXAMPLE 3 |
| $0.5 < |f11/f1| < 2$ | (1) | 1. 00 | 1. 16 | 0. 98 |
| $n11 > 1.8$ | (2) | 1. 83481 | 1. 83481 | 1. 83481 |
| $\nu 11 > 30$ | (3) | 42. 7 | 42. 7 | 42. 7 |
| $n12 > 1.8$ | (4) | 1. 88300 | 1. 88300 | 1. 88300 |
| $\nu 12 > 30$ | (5) | 40. 8 | 40. 8 | 40. 8 |
| $n14 > 1.8$ | (6) | 1. 90366 | 1. 88300 | 1. 90366 |
| $\nu 14 > 30$ | (7) | 31. 3 | 40. 8 | 31. 3 |
| $n16 > 1.8$ | (8) | 1. 80518 | 1. 84661 | 1. 84661 |
| $n17 < 1.5$ | (9) | 1. 49700 | 1. 49700 | 1. 49700 |
| $\nu 17 > 70$ | (10) | 81. 6 | 81. 6 | 81. 6 |

## FIG. 11

EXAMPLE 1 (WIDE ANGLE END)

FNO. =1. 96

d-LINE

-0. 1mm    0. 1mm
SPHERICAL
ABERRATION

ω=47. 0°

SAGITTAL
TANGENTIAL

-0. 1mm    0. 1mm
ASTIGMATISM

ω=47. 0°

-5%    5%
DISTORTION

ω=47. 0°

g-LINE

C-LINE

-0. 05mm    0. 05mm
LATERAL CHROMATIC
ABERRATION

## FIG. 12

EXAMPLE 1 (TELEPHOTO END)

FNO. =2. 55

d-LINE

-0. 1mm    0. 1mm
SPHERICAL
ABERRATION

ω=7. 2°

SAGITTAL
TANGENTIAL

-0. 1mm    0. 1mm
ASTIGMATISM

ω=7. 2°

-5%    5%
DISTORTION

ω=7. 2°

C-LINE

g-LINE

-0. 05mm    0. 05mm
LATERAL CHROMATIC
ABERRATION

## FIG. 13

EXAMPLE 2 (WIDE ANGLE END)

FNO. =1. 96          ω=47. 2°          ω=47. 2°          ω=47. 2°

d-LINE

g-LINE

C-LINE

——— SAGITTAL
---- TANGENTIAL

-0. 1mm   0. 1mm    -0. 1mm   0. 1mm    -5%   5%    -0. 05mm   0. 05mm

SPHERICAL          ASTIGMATISM        DISTORTION        LATERAL CHROMATIC
ABERRATION                                               ABERRATION

## FIG. 14

EXAMPLE 2 (TELEPHOTO END)

FNO. =2. 55          ω=7. 4°          ω=7. 4°          ω=7. 4°

d-LINE

g-LINE

C-LINE

——— SAGITTAL
---- TANGENTIAL

-0. 1mm   0. 1mm    -0. 1mm   0. 1mm    -5%   5%    -0. 05mm   0. 05mm

SPHERICAL          ASTIGMATISM        DISTORTION        LATERAL CHROMATIC
ABERRATION                                               ABERRATION

## *FIG. 15*

### EXAMPLE 3 (WIDE ANGLE END)

| FNO. =1. 96 | $\omega$=47. 3° | $\omega$=47. 3° | $\omega$=47. 3° |
|---|---|---|---|
| d-LINE | | | g-LINE ·· C-LINE |
| | SAGITTAL<br>TANGENTIAL | | |
| -0. 1mm   0. 1mm | -0. 1mm   0. 1mm | -5%   5% | -0. 05mm   0. 05mm |
| SPHERICAL<br>ABERRATION | ASTIGMATISM | DISTORTION | LATERAL CHROMATIC<br>ABERRATION |

## *FIG. 16*

### EXAMPLE 3 (TELEPHOTO END)

| FNO. =2. 55 | $\omega$=7. 2° | $\omega$=7. 2° | $\omega$=7. 2° |
|---|---|---|---|
| d-LINE | | | g-LINE ·· C-LINE |
| | SAGITTAL<br>TANGENTIAL | | |
| -0. 1mm   0. 1mm | -0. 1mm   0. 1mm | -5%   5% | -0. 05mm   0. 05mm |
| SPHERICAL<br>ABERRATION | ASTIGMATISM | DISTORTION | LATERAL CHROMATIC<br>ABERRATION |

Europäisches
Patentamt

European
Patent Office

Office européen
des brevets

# EUROPEAN SEARCH REPORT

Application Number

EP 08 01 7567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/008311 A (SONY CORP [JP]; NANJO YUSUKE [JP]) 27 January 2005 (2005-01-27) * figure 5; table 1 * ----- | 1-4 | INV. G02B15/17 G02B15/173 |
| X | US 6 038 082 A (TAKATSUKI AKIKO [JP]) 14 March 2000 (2000-03-14) * figure 1; tables 1,4,6 * ----- | 1-4 | |
| A | US 2003/067689 A1 (MIYANO HITOSHI [JP]) 10 April 2003 (2003-04-10) * figure 1; table 1 * ----- | 1-6 | |
| A | JP 11 287952 A (CANON KK) 19 October 1999 (1999-10-19) * the whole document * ----- | 1-6 | |
| A | US 5 856 885 A (YAMAMOTO CHIKARA [JP]) 5 January 1999 (1999-01-05) * figures 1,2 * ----- | 1-6 | |
| A | JP 09 033812 A (NIPPON KOGAKU KK) 7 February 1997 (1997-02-07) * the whole document * ----- | 1-6 | TECHNICAL FIELDS SEARCHED (IPC) G02B |

The present search report has been drawn up for all claims

| Place of search | Date of completion of the search | Examiner |
|---|---|---|
| Munich | 5 February 2009 | Hambach, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 048 532 A1

## ANNEX TO THE EUROPEAN SEARCH REPORT
## ON EUROPEAN PATENT APPLICATION NO.

EP 08 01 7567

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2009

| Patent document cited in search report | | Publication date | Patent family member(s) | | Publication date |
|---|---|---|---|---|---|
| WO 2005008311 | A | 27-01-2005 | NONE | | |
| US 6038082 | A | 14-03-2000 | JP | 3824190 B2 | 20-09-2006 |
| | | | JP | 11142736 A | 28-05-1999 |
| US 2003067689 | A1 | 10-04-2003 | JP | 2003107346 A | 09-04-2003 |
| JP 11287952 | A | 19-10-1999 | JP | 3943704 B2 | 11-07-2007 |
| US 5856885 | A | 05-01-1999 | JP | 3640366 B2 | 20-04-2005 |
| | | | JP | 10068882 A | 10-03-1998 |
| JP 9033812 | A | 07-02-1997 | NONE | | |

EPO FORM P0459

For more details about this annex : see Official Journal of the European Patent Office, No. 12/82

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11101941 A

- JP HEI11287952 A